# EUROPEAN PATENT APPLICATION

(11) **EP 3 922 616 A1**
(43) Date of publication of application: **15.12.2021**
(21) Application number: 20762702.7
(22) Date of filing: 17.02.2020
(51) Int. Cl.: C03C 23/00

(54) **GLASS FILM**

(30) Priority: 28.02.2019 JP 2019036550
(71) Applicant: NITTO DENKO CORPORATION, Ibaraki-shi Osaka 567-8680 (JP)
(72) Inventor: INAGAKI, Junichi, Ibaraki-shi, Osaka 567-8680 (JP); KANNO, Toshihiro, Ibaraki-shi, Osaka 567-8680 (JP); MURASHIGE, Takeshi, Ibaraki-shi, Osaka 567-8680 (JP)
(74) Representative: Hoffmann Eitle
(86) International application number: PCT/JP2020/006016
(87) International publication number: WO 2020/175207

(57) **Abstract**

Provided is a glass film in which an optical defect is less likely to occur and which has excellent handleability. The glass film has a thickness of 150 µm or less and has flexibility. On one surface of the glass film, the number of deposited contaminants of 5 µm or more is 130/m² or more, and the number of deposited contaminants of 100 µm or more is 10/m² or less. On one surface of the glass film, the number of deposited contaminants of 5 µm or more and less than 100 µm is preferably 130 to 1200/m². The glass film preferably has a length of 100 m or more.

## Description

### TECHNICAL FIELD

The present invention relates to a flexible glass film.

### BACKGROUND ART

Optical devices such as display devices, lighting devices and solar cells are becoming lighter and thinner. For meeting these requirements, replacement of glass materials with plastic materials is also in progress, but it is difficult for plastic materials to impart high impact resistance and glossiness (glare feeling) like glass.

Thus, it has been proposed to use a thin glass film having flexibility for reducing the weight and the thickness of a device while taking advantage of glass (see *e.g.,* Patent Document 1). Since a glass film having flexibility can also be applied to a roll-to-roll process, not only reduction of the thickness and the weight of the device are reduced, but also improvement of productivity and reduction of cost of the device and constituent members can be expected.

### PRIOR ART DOCUMENT

### PATENT DOCUMENT

Patent Document 1: Japanese Patent Laid-open Publication No. 2011-16708

### SUMMARY OF THE INVENTION

### PROBLEMS TO BE SOLVED BY THE INVENTION

Like a process for producing a glass plate, a process for producing a glass film requires melting, molding and cooling, and involves a large scale of equipment, so that it is difficult to enhance cleanliness. In addition, glass is insulating and easily charged. Thus, many contaminants caused by the production process are deposited on the glass film.

When an adhesive, a resin layer or the like is disposed on a surface of a glass film with contaminants deposited thereon, the contaminants caught in an interface may be optical defects. In addition, in a roll-to-roll process, a force may locally applied to a portion on which contaminants are deposited during contact with a conveyance roll or bonding to another member, resulting in breakage of the glass film.

In an example of the above-mentioned Patent Document 1 it is described that a surface of a sized glass film was washed with a solvent. However, since glass has higher surface free energy over plastic materials, it may be impossible to sufficiently remove contaminants only by cleaning with a solvent.

As a method for cleaning a glass plate used for a display or the like, a method is known in which a surface layer of the glass plate is dissolved with a strong alkali to remove all deposited contaminants. This method is excellent in ability to remove deposited contaminants. However, it has been found that when this method is applied to a glass film, there is a problem that it is difficult to convey the glass film with a roll, or blocking occurs when the glass film is wound into a roll.

An object of the present invention is to provide a glass film which is less likely to have optical defects even when used for preparation of an optical device and which is excellent in handleability.

### MEANS FOR SOLVING THE PROBLEMS

In view of the situations described, the present inventors have conducted studies, and resultantly found that the above-described problems can be solved when the number of deposited contaminants is within a specific range.

The present invention relates to a flexible glass film having a thickness of 150 µm or less. The glass film has a first principal surface and a second principal surface. The glass film may have a long shape with a length of 100 m or more.

On the first principal surface of the glass film, the number of deposited contaminants of 5 µm or more is 130/m² or more, and the number of deposited contaminants of 100 µm or more is 10/m² or less. On the first principal surface of the glass film, the number of deposited contaminants of 5 µm or more and less than 100 µm is preferably 130 to 1200/m².

On the first principal surface of the glass film, the number of deposited contaminants of 5 µm or more and 50 µm or less is preferably 100/m² or more, and the number of deposited contaminants of more than 50 µm and less than 100 µm is preferably 300/m² or less.

### EFFECTS OF THE INVENTION

Since the number of deposited contaminants on at least one surface is within a specific range, it is possible to suppress occurrence of optical defects caused by the deposited contaminants and breakage of the glass film, and slipperiness can be imparted to the glass film to ensure good handleability.

### BRIEF DESCRIPTION OF THE DRAWINGS

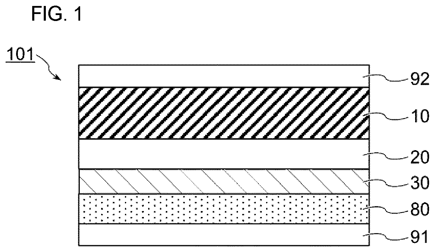

FIG. 1 is a sectional view showing an example of a stacking configuration of an optical laminate.

### MODE FOR CARRYING OUT THE INVENTION

Glass film is a sheet-shaped glass material having flexibility. Examples of glass materials that form the glass film include soda-lime glass, borate glass, aluminosilicate glass and quartz glass. The content of alkali metal components (*e.g.*, Na₂O, K₂O and Li₂O) of the glass material is preferably 15% by weight or less, more preferably 10% by weight or less.

For imparting flexibility, the thickness of the glass film is preferably 150 µm or less, more preferably 120 µm or less, further preferably 100 µm or less. For imparting strength, the thickness of the glass film is preferably 10 µm or more, more preferably 25 µm or more, further preferably 40 µm or more, especially preferably 50 µm or more. The light transmittance of the glass film at a wavelength of 550 nm is preferably 85% or more, more preferably 90% or more. Similarly to a general glass material, the glass film has a density of about 2.3 to 3 g/cm³.

The method for forming the glass film is not particularly limited, and any appropriate method can be employed. For example, a mixture containing a main raw material such as silica or alumina, an antifoaming agent such as sodium sulfate or antimony oxide, and a reducing agent such as carbon is melted at a temperature of 1400 to 1600°C, formed into a sheet shape, and then cooled to prepare a glass film. Examples of methods for forming glass into a sheet shape include a slot down draw method, a fusion method and a float method.

The glass film may be a sized sheet or may have a long shape. It is preferable that the glass film has a long shape from the viewpoint of being applicable to a roll-to-roll process and improving productivity of a device and constituent members thereof (*e.g.,* the later-described optical laminate). Since the glass film has flexibility, the long glass film is provided as a roll. The length of the long glass film is preferably 100 m or more, more preferably 300 m or more, further preferably 500 m or more. The width of the long glass film is, for example, 50 to 3000 mm, preferably 100 to 2000 mm.

As the glass film, commercially available thin glass may be used. Examples of the commercially available thin glass include "7059", "1737" and "EAGLE2000" manufactured by Corning Incorporated, "AN100" manufactured by Asahi Glass Co., Ltd., "NA-35" manufactured by NH Techno Glass Corporation, "OA-10" manufactured by Nippon Electric Glass Company, Limited, and "D263" and "AF45" manufactured by Schott AG.

In the glass film of the present invention, the number of deposited contaminants on at least one principal surface is within a specific range. The number of contaminants of 5 µm or more which are deposited on a surface of the glass film is 130/m² or more, and the number of contaminants of 100 µm or more which are deposited on the surface of the glass film is 10/m² or less. The number of deposited contaminants is counted by observation of the surface of the glass film with an optical microscope, and the maximum diameter of the contaminants is defined as a size of the contaminants.

Contaminants of 100 µm or more are visually recognized as optical defects when the glass film is bonded to another member. In addition, if contaminants of 100 µm or more are deposited on the surface of the glass film, a force may be locally applied to a portion on which the contaminants are deposited during conveyance of the glass film by a roll-to-roll process or during lamination with another member, thus causing breakage and cracking of the glass film, resulting in damage. Therefore, the number of contaminants of 100 µm or more is preferably as small as possible. The number of deposited contaminants of 100 µm or more is preferably 7/m² or less, more preferably 5/m² or less, further preferably 3/m² or less, particularly preferably 2/m² or less. The number of deposited contaminants of 100 µm or more is preferably as small as possible, and is ideally less than 1/m². The number of deposited contaminants of 150 µm or more is preferably 2/m² or less, more preferably less than 1/m², and is ideally 0/m².

From the viewpoint of preventing optical defects, breakage during conveyance, and the like, it is preferable that the number of deposited contaminants of less than 100 µm is also small. On the other hand, the surface of the glass film has higher smoothness over the resin film, and therefore when contaminants are not deposited on the surface of the glass film, blocking of the glass film easily occurs in the case where the glass film is superposed or wound into a roll. When blocking occurs in a roll, the glass film may be broken by local application of stress at the time of unwinding the glass film from the roll. In addition, when contaminants are not deposited on the surface of the glass film, the glass film may be difficult to convey by roll-to-roll because of low slipperiness.

In the present invention, deposited contaminants are present at 130/m² or more on the surface of the glass film. Since fine irregularities are formed on the surface of the glass film by deposited contaminants, slipperiness is imparted to the glass film, so that blocking, conveyance failure, winding failure and the like can be prevented. From the viewpoint of imparting slipperiness, the number of deposited contaminants of 5 µm or more on the glass film surface is preferably 150/m² or more, more preferably 200/m² or more, further preferably 230/m² or more.

The upper limit of the number of deposited contaminants of 5 µm or more is not particularly limited. However, the number of coarse contaminants of 100 µm or more tends to increase as the total number of deposited contaminants increases. For setting the number of deposited contaminants of 100 µm or more within the above-mentioned range, the number of deposited contaminants of 5 µm or more is preferably 1200/m² or less, more preferably 1000/m² or less, further preferably 800/m² or less, particularly preferably 600/m² or less. In addition, even in the case of deposited contaminants of 100 µm or less, the contaminants may be optical defects or cause breakage of the glass film when the deposited contaminants are present at a high density, thus the number of the deposited contaminants is preferably within the above-described range

As described above, since the glass film of the present invention has a small number of coarse deposited contaminants of 100 µm or more, occurrence of optical defects and breakage of the glass film during handling are suppressed. Since the number of deposited contaminants of 5 µm or more is within a specific range, slipperiness is imparted, so that handleability of the glass film can be secured. From the viewpoint of reducing the number of deposited contaminants of 100 µm or more and setting the number of deposited contaminants of 5 µm or more within a specific range, the number of deposited contaminants of 5 µm or more and less than 100 µm is preferably 130 to 1200/m², more preferably 150 to 1000/m², further preferably 200 to 800/m², particularly preferably 230 to 600/m².

Among deposited contaminants of 5 µm or more and less than 100 pm, deposited contaminants of 5 to 50 µm particularly significantly contribute in preventing breakage of the glass film caused by deposited contaminants during conveyance or the like while imparting slipperiness to the glass film by formation of fine irregularities. The number of deposited contaminants of 5 to 50 µm on the glass film surface is preferably 100/m² or more, more preferably 150/m² or more, further preferably 200/m² or more. The number of deposited contaminants of more than 50 µm and less than 100 µm is preferably 300/m² or less, more preferably 200/m² or less, further preferably 150/m² or less. The number of deposited contaminants of more than 50 µm and less than 100 µm is preferably 30/m² or more, more preferably 40/m² or more, further preferably 50/m² or more.

### <Control of Number of Deposited Contaminants >

Production of glass films is often performed in an environment with lower cleanliness as compared to production of optical devices such as display devices and production of members for optical devices. Thus, a large number of contaminants are deposited on the glass film immediately after production. For reducing the number of deposited contaminants of 100 µm or more being 10/m² or less, it is preferable to clean the glass film in a clean environment.

The method for cleaning the glass film is not particularly limited as long as the number of deposited contaminants can be reduced to the above-described range, and the method may be either a dry method or a wet method. Examples of the dry method include spraying of air, decomposition of contaminants by irradiation with UV, ozone or the like, removal of contaminants by a pressure sensitive adhesive roll or a pressure sensitive adhesive sheet, brush cleaning, blast cleaning and the like. Examples of the wet cleaning include cleaning with a cleaning liquid such as pure water, an acid, an alkali or an organic solvent, cleaning with a brush or a sponge in a state where a liquid such as a cleaning liquid is deposited on a surface of the glass film or in a state where the glass film is immersed in the liquid, ultrasonic cleaning and two-fluid cleaning.

Since glass has high surface free energy and high adhesion of deposited contaminants, it may be impossible to sufficiently remove contaminants only by contact with liquid. In addition, since deposited contaminants ascribed to an environment for production of the glass film contain a variety of substances, it may be impossible to sufficiently remove the contaminants even by a method in which contaminants are dissolved in an organic solvent or the like. In cleaning of a glass plate for display devices, a method is known in which the surface layer of glass is dissolved in a strong alkali to remove deposited contaminants. In this method, the contaminant removing effect is high, but the rate of removal of very small contaminants is also high, so that the number of deposited contaminants may be excessively reduced, leading to deterioration of slipperiness of the glass film.

Since the glass film has higher hardness than the plastic film and is less likely to be scratched, a method of removing deposited contaminants by physical impact force can be applied for cleaning the glass film. In particular, brush cleaning or blast cleaning is preferable as dry cleaning and two-fluid cleaning is preferable as wet cleaning because deposited contaminants can be moderately removed.

For the brush cleaning, one such as a contact-type web cleaner equipped with a rotatable brush is used. When the surface cleaning is continuously performed while the glass film is conveyed in a roll-to-roll manner, from the viewpoint of maintaining the cleaning quality constant, a cleaner equipped with a facility for removing contaminants deposited on the brush by a suction method or the like is preferable.

Dry ice blasting is preferable as blast cleaning. In dry ice blasting, a dry ice pellet is sprayed onto a glass film at a high speed. When dry ice enters between the glass film and the deposited contaminant followed by rapid vaporization, the deposited contaminant can be peeled and removed due to the rapid volume change by the vaporization. In addition, since dry ice sublimizes, the blasting particles do not remain as contaminants.

The two-fluid cleaning is a treatment in which a mixed fluid of a gas and a liquid is supplied from a two-fluid nozzle to a surface of a glass film. Droplets in the mixed fluid collide against the surface of the glass film, and contaminants deposited on the surface of the glass film can be removed by the impact. As the liquid and the gas for the two-fluid cleaning, water and air are generally used. As the gas (carrier gas), nitrogen, oxygen, carbon dioxide, hydrogen, ozone, argon or the like may be used. It is preferable that the two-fluid nozzle has a carrier gas pressure of about 0.1 to 0.6 MPa and a liquid pressure of about 0.05 to 0.5 MPa.

It is preferable that the cleaning is performed continuously while the glass film is conveyed in a roll-to-roll manner. The cleaning may be performed on only one surface of the glass film, or both surfaces of the glass film may be cleaned. When both surfaces of the glass film are cleaned, the method for cleaning one surface and the method for cleaning the other surface may be the same or different.

When cleaning is performed in a roll-to-roll manner, the cleaning may be performed off-line or in-line. In the in-line cleaning, a resin layer or the like is formed on the surface of the cleaned glass film after the glass film is cleaned and before the glass film is wound into a roll. In the off-line cleaning, the cleaned glass film is once wound into a roll. Before the cleaned glass film is wound into a roll, a protective film may be temporarily attached for the purpose of, for example, preventing redeposition of contaminants on the cleaned surface. As described above, occurrence of blocking of glass film can be suppressed by controlling the number of deposited contaminants, so that the glass film can be solely (in a single layer) wound into roll shape without temporarily attaching a protective film of the like onto the glass film.

While the glass film has high hardness and excellent impact resistance, very small cracks are easily generated at the end portions (end surfaces) of the glass film. When bending stress is applied to the glass film, the stress is concentrated on cracks, so that the cracks may extend, leading to breakage of the glass film. In preparation of an optical laminate by roll-to-roll, a glass film or a laminate including a glass film is bent along the outer periphery of a conveyance roll when passing thereover, so that bending stress is applied to the glass film. In a continuous roll of a glass film or a laminate, a state is maintained in which bending stress is applied to the glass film. Thus, during roll-to-roll conveyance and storage of the roll, cracks are easily generated along the width direction due to bending stress of the glass film, so that the glass film may be broken.

For obtaining a long glass film of 100 m or more, it is preferable to control the number of deposited contaminants and prevent breakage caused by bending. For preventing breakage of the glass film due to bending, it is preferable that number of cracks on the end surface throughout and continuously in the longitudinal direction is small, and good end surface quality is obtained at the time of winding the glass film into a roll. The number of cracks having a length of 3 µm or more on the end surface of the glass film is preferably 5 or less, more preferably 1 or less, further preferably 0.5 or less per 1 m in the longitudinal direction. The length of the crack is a distance between the end surface of the glass film and the tip of the crack in the width direction.

Even when the number of cracks at the end portion of the glass film in the width direction is small, breakage easily occurs if the cracks have a large length. Thus, when cracks are generated on the end surface of the glass film, it is preferable that cracks having a length exceeding 300 µm are not present over a distance of 10 m or more in the longitudinal direction, and it is more preferable that cracks having a length exceeding 300 µm are not present over a distance of 100 m or more in the longitudinal direction. The maximum value of the crack length in observation of the end surface of the glass film over a distance of 10m in the longitudinal direction is preferably 300 µm or less, more preferably 100 µm or less, further preferably 50 µm or less.

For obtaining a glass film having a small number of cracks and good end surface quality, it is preferable that generation of cracks is prevented or crack generation areas are removed. Examples of the method for preventing generation of cracks or removing cracks include continuous temporary cutting by laser, scribe cutting, water jetting or dicing, and polishing processing typified by polishing. Two or more of the above-mentioned methods may be appropriately selected according to a combination of the glass and the optical laminate, and used in combination to prevent generation of cracks and/or remove cracks.

For preventing breakage of the glass film due to extension of cracks, a measure for preventing the extension of cracks may be taken. For example, even when a crack having a large length is present at the end portion of the glass film, breakage of the glass film caused by the crack can be prevented by taking a measures for preventing extension of cracks. The above-described prevention of generation of cracks and/or removal of cracks may be combined with prevention of extension of cracks.

For preventing extension of cracks generated on the end surface of the glass film, it is preferable to provide crack extension preventing means on a surface of the glass film. For example, by bonding a resin film to a surface of the glass film with an adhesive interposed therebetween, extension of cracks in the width direction due to bending can be suppressed. Even when a crack extends in the width direction from the end portion of the glass film, extension of the crack is stopped by an elasticity of the adhesive as long as the resin film is bonded to the tip of the extended crack with the adhesive interposed therebetween.

The glass film of the present invention can be applied to substrate materials for semiconductor elements, and optical devices such as display devices, illumination devices and solar cells. In the optical device, the glass film may be used as a substrate material for forming an element or the like, or may be used as a cover glass for protecting a surface of a device.

When the glass film is used as a cover glass of a device, the glass film may be used as a single layer, or may be used as a laminate with another resin layer, film or the like. Examples of the resin layer laminated with the glass film include pressure sensitive adhesives and adhesives. Examples of the film laminated with the glass film include polarizers and various transparent resin films.

FIG. 1 is a sectional view showing an example of a stacking configuration of an optical laminate using a glass film, where a transparent resin film 20, a polarizer 30 and a pressure sensitive adhesive layer 80 are disposed on one surface of the glass film 10.

As the polarizer 30, a film which exhibits absorption dichroism at any wavelength in the visible light region is used. Single transmittance of the polarizer 30 is preferably 40% or more, more preferably 41% or more, further preferably 42% or more, especially preferably 43% or more. The polarization degree of the polarizer 30 is preferably 99.8% or more, more preferably 99.9% or more, further preferably 99.95% or more.

As the polarizer 30, any appropriate polarizer can be adopted according to a purpose. Examples thereof include hydrophilic polymer films such as polyvinyl alcohol-based films, partially formalized polyvinyl alcohol-based films and ethylene-vinyl acetate copolymer-based partially saponified films which are uniaxially stretched with a dichroic substance such as iodine or a dichroic dye adsorbed, and polyene-based oriented films such as dehydrated products of polyvinyl alcohol and dehydrochlorinated products of polyvinyl chloride. In addition, guest-host-type polarizers obtained by unidirectionally orienting a liquid-crystalline composition containing a dichroic substance and a liquid-crystalline compound as disclosed in U.S. Patent No. 5,523,863 etc., E-type polarizers obtained by uniaxially orienting a lyotropic liquid crystal as described in U.S. Patent No. 6,049,428 etc., and the like can be used.

Among these polarizers, polyvinyl alcohol-based (PVA)-based polarizers obtained by adsorbing a dichroic substance such as iodine or dichroic dye to a polyvinyl alcohol-based film such as a polyvinyl alcohol film or a partially formalized polyvinyl alcohol film, and uniaxially orienting the film are preferably used because these polarizers have a high polarization degree. For example, a PVA-based film is iodine-stained and stretched to obtain a PVA-based polarizer.

The thickness of the polarizer 30 is, for example, about 1 to 80 µm. The thickness of the polarizer 30 may be 3 µm or more or 5 µm or more. As the polarizer 30, a thin polarizer having a thickness of 25 µm or less, preferably 15 µm or less, more preferably 10 µm or less can be used. By using a thin polarizer a thin optical laminate can be obtained.

In the optical laminate 101 shown in FIG. 1, a transparent resin film 20 is provided between the glass film 10 and the polarizer 30. By disposing the transparent resin film 20 on a surface of the polarizer 30, the durability of the polarizer tends to be improved. In addition, durability against impact from the surface of the glass film tends to be improved by disposing the transparent resin film between the glass film and the polarizer.

The material of the transparent resin film 20 is not particularly limited. From the viewpoint of, for example, imparting durability to the polarizer and improving the impact resistance of the optical laminate, the material of the transparent resin film is preferably a resin material, and in particular, a thermoplastic resin excellent in transparency, mechanical strength, heat stability and moisture barrier property is preferably used. Specific examples of the resin include cellulose resins such as triacetyl cellulose, polyester-based resins, polyethersulfone resins, polysulfone resins, polycarbonate resins, polyamide resins, polyimide resins, polyolefin resins, (meth)acryl resins, cyclic polyolefin resins (norbornene-based resins), polyarylate resins, polystyrene resins, polyvinyl alcohol resins and mixtures thereof.

The thickness of the transparent resin film 20 is preferably 5 to 100 µm, more preferably 10 to 60 µm, further preferably 20 to 50 µm. The transparent resin film 20 may be an optically isotropic film or an optically anisotropic film.

The pressure sensitive adhesive layer 80 is used for bonding the optical laminate 101 and another component constituting a device. For example, the optical laminate 101 can be bonded to an image display cell such as an OLED cell or a liquid crystal cell with the pressure sensitive adhesive layer 80 interposed therebetween. The pressure sensitive adhesive that forms the pressure sensitive adhesive layer 80 is not particularly limited, and one having an acryl-based polymer, a silicone-based polymer, polyester, polyurethane, polyamide, polyether, a fluorine-based polymer, a rubber-based polymer or the like as a base polymer can be appropriately selected. In particular, the pressure sensitive adhesive is preferably one that is excellent in transparency, has moderate wettability, cohesiveness and adhesiveness, and is excellent in weather resistance, heat resistance and the like, such as an acryl-based pressure sensitive adhesive.

The pressure sensitive adhesive layer 80 may be a laminate of two or more layers. The thickness of the pressure sensitive adhesive layer 80 is, for example, about 1 to 300 µm, preferably 5 to 50 µm, more preferably 10 to 30 µm.

Preferably, a separator 91 is temporarily attached on a surface of the pressure sensitive adhesive layer 80. The separator 91 protects the surface of the pressure sensitive adhesive layer 80 until the optical laminate is bonded to another component. As a constituent material for the separator 91, a plastic film such an acrylic film, a polyolefin film, a cyclic polyolefin film or a polyester film is preferably used.

The thickness of the separator 91 is normally about 5 to 200 µm, preferably 10 to 60 µm, more preferably 15 to 40 µm, further preferably 20 to 30 µm. Preferably, the surface of the separator 91 is subjected to release treatment. Examples of the release agent include silicone-based materials, fluorine-based materials, long-chain alkyl-based materials and fatty acid amide-based materials. The film used as the base material for forming the pressure sensitive adhesive layer 80 may be used as a separator as it is.

As shown in FIG. 1, a surface protective film 92 may be temporarily attached on a surface of the glass film 10. The surface protective film 92 protects the glass film and the like until the optical laminate is used. Since the surface protective film 92 is temporarily attached to the surface of the glass film 10, for example, generation of scratches, holes and the like can be prevented even when an object with a sharp tip falls onto the optical laminate.

As a material for the surface protective film 92, a plastic material similar to that for the separator 91 is preferably used, and examples thereof include polyethylene terephthalate and polyethylene. Preferably, the surface protective film 92 has a pressure sensitive adhesive layer on a surface to be attached to the glass film. As the surface protective film 92, a self-pressure sensitive adhesive film obtained by laminating a film-forming resin layer and a pressure sensitive adhesive layer by coextrusion may be used. The thickness of the surface protective film 92 is, for example, about 20 µm to 1000 µm, preferably 30 to 500 µm, more preferably 40 to 200 µm, further preferably 50 to 150 µm.

The optical laminate may include a transparent film or the like (not illustrated) between the polarizer 30 and the pressure sensitive adhesive layer 80. By disposing the transparent film between the polarizer 30 and the pressure sensitive adhesive layer 80, the durability of the polarizer can be further improved. The material, thickness, optical characteristics, and the like of the transparent film disposed between the polarizer 30 and the pressure sensitive adhesive layer 80 may the same as those of the transparent resin film 20 disposed between the polarizer 30 and the glass film 10. The transparent film may be an optically isotropic film or an optically anisotropic film. Disposing an optically anisotropic film between the polarizer 30 and the pressure sensitive adhesive layer 80 may enable exhibition of various functions.

For example, when the optical laminate is laminated on a surface of an OLED cell, and the transparent film and the polarizer 30 constitute a circularly polarizing plate, external light reflected by metal electrodes of an OLED element cell, etc. can be blocked to improve visibility of display. The transparent film may be an obliquely stretched film.

When the optical laminate is laminated on a surface of a liquid crystal cell, various optical compensations can be performed by an optically anisotropic film. The type of the optically anisotropic film used for optical compensation may be appropriately selected according to the type of the liquid crystal cell or the like.

Preferably, the glass film, the transparent resin film, the polarizer and the like are laminated with adhesive layers (not shown) interposed between each of the layers. Examples of the material that forms the adhesive include thermosetting resins and active energy ray-curable resins. Specific examples of the resins include epoxy-based resins, silicone-based resins, acryl-based resins, polyurethane, polyamide, polyether and polyvinyl alcohol. The adhesive may contain a polymerization initiator, a crosslinker, an ultraviolet absorber, a silane coupling agent, and the like.

The thickness of the adhesive layer is preferably 10 µm or less, more preferably 0.05 to 8 µm, further preferably 0.1 to 7 µm. When the thickness of the adhesive layer that is used for bonding the glass film and the transparent resin film, bonding the glass film and the polarizer, or bonding the polarizer and the transparent resin film is within the above-described range, breakage of the glass film is suppressed, and thus an optical laminate excellent in impact resistance can be obtained. An adhesive may be used for bonding the transparent resin films.

The optical laminate may have various functional layers other than those described above. Examples of the functional layer include antireflection layers, antifouling layers, light diffusion layers, easily-adhesive layers and antistatic layers.

The glass film may be subjected to a decorative printing. The print thickness in the decorative printing is, for example, about 5 to 100 µm. For filling voids on the periphery of a printing level difference of the decorative printed portion arranged on the surface of the glass film, an adhesive layer or a pressure sensitive adhesive layer (not shown) may be disposed between the glass film and the optical film.

The decorative printing may be performed on any surface of the glass film. In addition, a decorative printing may be performed on a constituent member of the optical laminate other than the glass film. For example, a decorative print may be applied to the polarizer 30 or the transparent resin film 20. By laminating a transparent film having a decorative printing (decorative printed film) to a constituent member of the optical laminate by a roll-to-roll manner, an optical laminate having a decorative printed portion can also be obtained.

An optical laminate is obtained by laminating the transparent resin film 20, the polarizer 30 and the like on the glass film 10. When the glass film 10 has a long shape, it is preferable to perform lamination while performing roll-to-roll conveyance of the glass film. As described above, the glass film of the present invention has a small number of coarse deposited contaminants of 100 µm or more. Thus, it is possible to prevent breakage of the glass film due to local application of a force to a portion on which contaminants are deposited during roll-to-roll conveyance or lamination with a film or the like.

The lamination order in formation of the optical laminate is not particularly limited. For example, the transparent resin film 20, the polarizer 30 and the like may be sequentially laminated onto the glass film 10, or a laminate obtained by laminating a plurality of films in advance may be laminated to the glass film. In the lamination, an adhesive may be used as necessary, and the adhesive may be cured after the lamination.

The method for curing the adhesive can be appropriately selected according to the type of the adhesive. When the adhesive is a photocurable adhesive, curing is performed by ultraviolet irradiation. The conditions for ultraviolet irradiation can be appropriately selected according to type of the adhesive, the composition of the adhesive composition, and the like. The accumulated amount of light is, for example, 100 to 2000 mJ/cm². When the adhesive is a thermosetting adhesive, curing is performed by heating. The heating conditions can be appropriately selected according to type of the adhesive, the composition of the adhesive composition, and the like. For the heating conditions, for example, the temperature is 50°C to 200°C, and the heating time is about 30 seconds to 30 minutes

The optical laminate having the transparent resin film 20, the polarizer 30 and the like laminated on the first principal surface of the glass film 10 exhibits high hardness due to the glass film. In addition, since the optical laminate includes the resin film such as he transparent resin film 20 and the polarizer 30 laminated on the first principal surface of the glass film 10, breakage of the glass film 10 is prevented thereby exhibiting excellent impact resistance. This is supposed to be because impacts applied to the second principal surface of the glass film can be effectively released to the first principal surface-side. Impact resistance is remarkably improved particularly when the polarizer 30 is disposed on the first principal surface of the glass film 10 with the transparent resin film 20 interposed therebetween. In addition, since the glass film is hardly broken, it is possible to decrease the thickness of the glass film, and the weight of the optical laminate can be accordingly reduced.

Further, a glass material has high moisture and gas shielding properties, high durability against organic solvents, acids, alkalis and the like, and excellent heat resistance. Therefore, by disposing the glass film 10 on the surface, protection performance for the polarizer 30 can be improved to prevent degradation of the polarizer as compared to a case where only the resin film 20 is present.

The glass material has a surface gloss, and therefore by disposing the glass film on a surface of the image display device, an excellent glare feeling can be obtained. In addition, the glass material is optically isotropic, and therefore coloring of reflected light hardly occurs, so that high visibility can be attained. Further, the glass film has high surface hardness, and is thus excellent in impact resistance. Thus, in an image display device in which the optical laminate is arranged such that the glass film is on a viewing-side surface, the glass film performs a function as a front window, so that it is not necessary to place a window layer separately. Therefore, the process of manufacturing the image display device can be simplified, and the thickness and the weight of the device can be reduced due to reduction of the number of constituent members.

### EXAMPLES

Hereinafter, examples relating to cleaning of glass film are described, but the present invention is not limited to these examples.

### [Reference Example]

A sample of 100 mm × 100 mm was cut out from a roll of a 100 µm-thick glass film, the surface was observed with an optical microscope, and the total number of deposited contaminants of 5 µm or more in the observation range was counted. In addition, the number of deposited contaminants having a size of 100 µm or more was counted. This operation was performed on 100 samples (total area: 1 m²), and the total number of contaminants was determined.

### [Examples and Comparative Examples]

A glass film was unwound from the roll of the glass film, and a surface of the glass film was cleaned while being conveyed in one direction at a conveyance speed of 5 m/min. The cleaned glass film was once wound into a roll, and the number of contaminants per 1 m² was then determined by optical microscope observation in the same manner as in Reference Example.

### <Example 1: Brush Cleaning>

A surface of the glass film was cleaned with a web cleaner ("TURBO-SS" manufactured by SHINKO CO,.LTD.) equipped with a rotating brush and a vacuum cleaner. The operating conditions were as follows:
Brush: made of nylon, length: 20 mm, thickness: 75 µm;
Brush rotation speed: 500 rpm (reverse rotation with respect to glass film conveyance direction);
Distance between brush and glass film: 1 mm; and
Blower operation condition: -3 kPa.

### <Example 2: Dry Ice Blast Cleaning>

A surface of a glass film was cleaned by a dry ice blasting apparatus ("QuickSnow" manufactured by AIR WATER INC.) including a plurality of nozzles in the width direction (direction orthogonal to the conveyance direction). The operating conditions were as follows:
Dry ice particle size: 100 µmϕ;
Air pressure: 0.4 MPa; and
Distance between nozzle and glass film: 20 cm.

### <Example 3: Two-Fluid Cleaning>

A surface of a glass film was cleaned with a two-fluid cleaning apparatus having a plurality of two-fluid nozzles (manufactured by Spraying System Japan Co., Ltd.) in the width direction. The operating conditions were as follows:
Liquid: water;
Gas: compressed air;
Water pressure: 0.2 MPa;
Air pressure: 0.2 MPa; and
Distance between nozzle and glass film: 1 cm.

### <Comparative Example 1: Ultrasonic Cleaning>

Cleaning was performed in water at normal temperature for 10 minutes using an ultrasonic cleaning apparatus ("8510 J-MTH" manufactured by Branson Ltd.).

### <Comparative Example 2: Pressure Sensitive Adhesive Roll>

An adhesive roll ("BETALON" manufactured by MEIWA RUBBER CO.,LTD.) was pressed against a surface of a glass film at a pressure of 0.2 MPa to clean the surface of the glass film.

### <Comparative Example 3: Alkali cleaning>

An aqueous solution of 5% by weight sodium hydroxide was sprayed to a surface of the glass film, and after 5 minutes, washing with water and drying were performed.

### [Evaluation]

### <Product Yield>

The ratio at which the glass film do not have contaminants of 100 µm or more and can be used as normal products (= product yield) when used for a display with a screen size of 15 inches (332 mm × 187 mm) was calculated on the basis of the number of contaminants per 1 m².

### <Blocking>

A 100 m-length glass film was unwound from the roll of the cleaned glass film, and rated "Good" when breakage due to blocking did not occur until 100 m-length of glass film was unwound, or rated "Fair" when breakage occurred due to blocking before 100 m-length of glass film was unwound.

Table 1 shows the number of contaminants on the glass films of Reference Example, Examples 1 to 3 and Comparative Examples 1 to 3, and the results of the yield and blocking tests.

**Table 1**

| | Cleaning method | Number of deposited contaminants (number/m²) | | Yield (%) | Blocking |
|---|---|---|---|---|---|
| | | 5 µm or more | 100 µm or more | | |
| Reference Example | Uncleaned | 5548 | 72 | 0 | Good |
| Example 1 | Brush | 500 | 1 | 93 | Good |
| Example 2 | Blasting | 375 | 1 | 93 | Good |
| Example 3 | Two-fluid body | 300 | 0 | 100 | Good |
| Comparative Example 1 | Ultrasonic | 4287 | 36 | 0 | Good |
| Comparative Example 2 | Pressure sensitive adhesive roll | 3465 | 44 | 0 | Good |
| Comparative Example 3 | Alkaline | 80 | 0 | 100 | Fair |

As shown in Table 1, a large number of contaminants of 100 µm or more were deposited on an uncleaned glass film, one or more contaminants of 100 µm or more are present per 15 inch size, and therefore the calculated value of the product yield was 0. In Comparative Example 1 where ultrasonic cleaning was performed and Comparative Example 2 where deposited contaminants were removed with a pressure sensitive adhesive roll, the number of deposited contaminants was smaller as compared to Reference Example. However, the contaminant removing effect was not sufficient, and the calculated value of the yield for the 15 inch-size product was 0 as in Reference Example.

In Comparative Example 3 where the surface layer of the glass film was dissolved with a strong alkali, the number of contaminants was significantly reduced, and contaminants of 100 µm or more were not observed in the range of 1 m². However, the number of deposited contaminants small in size significantly decreased as the surface layer was dissolved, so that blocking of the glass film occurred when the glass film was wound around the roll, and breakage occurred when the glass film was unwound from the roll.

In Examples 1 to 3, deposited contaminants of 100 µm or more were appropriately removed and deposited contaminants properly remained, so that blocking of the glass film did not occur at the time of winding the glass film into a roll and good handleability was exhibited. The above results reveal that when the number of deposited contaminants of the glass film is within a specific range, optical defects are less likely to occur, the product yield can be improved, and the glass film is excellent in handleability.

## Claims

1. A glass film having a thickness of 150 µm or less and having flexibility, wherein
the glass film has a first principal surface and a second principal surface, and
on the first principal surface, a number of deposited contaminants of 5 µm or more is 130/m² or more, and a number of deposited contaminants of 100 µm or more is 10/m² or less.

2. The glass film according to claim 1, wherein a number of deposited contaminants of 5 µm or more and less than 100 µm is 130 to 1200/m² on the first principal surface.

3. The glass film according to claim 1 or 2, wherein a number of deposited contaminants of 5 µm or more and 50 µm or less is 100/m² or more on the first principal surface.

4. The glass film according to any one of claims 1 to 3, wherein a number of deposited contaminants of more than 50 µm and less than 100 µm is 300/m² or less on the first principal surface.

5. The glass film according to any one of claims 1 to 4, having a length of 100 m or more.
